# EUROPEAN PATENT APPLICATION

(11) **EP 4 712 234 A1**
(43) Date of publication of application: **18.03.2026**
(21) Application number: 25200823.0
(22) Date of filing: 08.09.2025
(51) Int. Cl.: H01M 50/213, H01M 50/242, H01M 50/291, H01M 50/293, H01M 10/6567

(54) **BATTERY PACK**

(30) Priority: 14.09.2024 CN 202422271455 U; 12.12.2024 WO PCT/CN2024/138740
(71) Applicant: Eve Energy Co., Ltd., Huizhou, Guangdong 516006 (CN)
(72) Inventor: ZHANG, Guojiang, Huizhou, 516006 (CN); QIU, Wencong, Huizhou, 516006 (CN); XU, Yuhong, Huizhou, 516006 (CN); JIANG, Jibing, Huizhou, 516006 (CN)
(74) Representative: Studio Torta S.p.A.

(57) **Abstract**

A battery pack is provided. The battery pack includes a housing (1), a battery cell group (2), and a plurality of reinforcing plates (3). Each of the plurality of reinforcing plates (3) includes a foam adhesive layer and a fiberglass cloth layer. The foam adhesive layer encapsulates the fiberglass cloth layer. The battery cell group (2) is arranged in the housing (1). Each of two side walls of the battery cell group (2) along a length direction of the battery cell group (2) is arranged with a corresponding one of the plurality of reinforcing plates (3). The foam adhesive layer is attached to a corresponding one of the two side walls of the battery cell group (2).

## Description

### TECHNICAL FIELD

The present disclosure relates to the technical field of batteries, and in particular to a battery pack.

### BACKGROUND

With rapid development of electric vehicle market, requirements for battery energy density, safety, and reliability are increasing. Currently, as a core component of an electric vehicle battery system, a battery pack typically consists of a plurality of battery cells combined in series or parallel. However, while this multi-cell structure can improve energy density, the design also brings the following issues.

First, a combination of the plurality of battery cells results in weak integrity of the battery cell group. Since gaps and connectors are present between the battery cells, these gaps and connectors may become stress concentration areas when the battery pack is subjected to an external impact or vibration, leading to deformation or even fracture of the battery pack. Therefore, a low strength of the battery pack increases a safety risk.

Second, in new energy vehicles or other devices requiring battery packs with a high battery capacity, stacking and arrangement of the plurality of battery cells result in an increased overall volume of the battery pack. According to lever principle, bending and shear resistance of an entire battery pack significantly decreases. Especially when used in the new energy vehicles, which frequently encounter speed bumps or uneven roads, the battery pack is subjected to various complex forces from road surface. If the bending and shear resistance of the battery pack is insufficient, deformation or damage may occur, leading to serious consequences such as short circuits, fires, or even explosions.

Furthermore, insulation of battery cells in the battery pack is typically achieved through a potting process, forming a potting layer to encapsulate the battery cells for insulation. However, the potting layer only improves insulation performance of the battery cells and does not enhance stiffness of the battery pack, leaving safety hazards unresolved.

### SUMMARY

To overcome at least one defect in the related art mentioned above, the present disclosure provides a battery pack. In this way, the safety hazards caused by insufficient stiffness of the battery pack can be reduced.

The technical solution adopted by the present disclosure to solve the problem is as follows.

A battery pack includes a housing, a battery cell group, and a plurality of reinforcing plates. The battery cell group is arranged in the housing. The plurality of reinforcing plates are disposed on the battery cell group along a length direction of the battery cell group. Each of the plurality of reinforcing plates includes a foam adhesive layer and a fiberglass cloth layer. The foam adhesive layer encapsulates the fiberglass cloth layer. The foam adhesive layer is attached to the battery cell group.

In this way, based on the lever principle, weakest points of bending and shear resistance in the battery cell group are along the length direction of the battery cell group. Mounting the reinforcing plates on both sides of the battery cell group along the length direction can specifically enhance the bending and shear resistance of the battery pack. Moreover, each of the plurality of reinforcing plates is composed of the foam adhesive layer and the fiberglass cloth layer, which improve the stiffness of the battery pack while maintaining low weight and volume, thereby avoiding significant increases in the battery pack's weight or excessive occupation of internal space of the housing. This ensures a high energy density in the battery pack. Additionally, both the foam adhesive layer and the fiberglass cloth layer are excellent insulating materials, further improving safety of the battery pack.

Beyond the above benefits, the reinforcing plates formed by combining the foam adhesive layer and the fiberglass cloth layer offers a higher convenience. Since the battery pack production process already involves potting the battery cell group, the fiberglass cloth layer can be pre-placed in a corresponding position before the foam adhesive is injected. Part of the foam adhesive solidifies on a surface of the fiberglass cloth layer to form the foam adhesive layer. This reduces additional processing steps, ensuring that an addition of reinforcing plates does not affect a normal production timeline of the battery pack. Furthermore, due to material properties of the fiberglass cloth layer, the fiberglass cloth layer inherently has burrs that can puncture bubbles in the foam adhesive, increasing a density of the foam adhesive and giving the foam adhesive layer a trend toward solidification, thereby further enhancing a strength and hardness of the reinforcing plates.

Furthermore, the fiberglass cloth layer has pores and burrs, the burrs extend into the foam adhesive layer, and the foam adhesive layer enters the pores.

In this way, penetration of burrs in the foam adhesive layer and penetration of the foam adhesive layer in the pores can improve a bonding strength between the fiberglass cloth layer and the foam adhesive layer.

Furthermore, the battery cell group includes a plurality of battery cells. The plurality of battery cells are arranged in N columns. (N-1) columns of gaps are formed between the N columns of battery cells. At least one column of the (N-1) columns of the gaps is provided with a corresponding one reinforcing plate of the plurality of reinforcing plates. The foam adhesive layer of the corresponding one reinforcing plate (3) is attached to one or two columns of the N columns of the battery cells (21) adjacent to the foam adhesive layer.

By adopting the above solution, in order to increase energy storage capacity of the battery pack, the number of battery cells can be increased. For convenience in assembling the battery cell group, the battery cells are arranged in a plurality of columns. Based on this structure, reinforcing plates can be selectively arranged in one or more columns of gaps according to actual strength and insulation requirements.

Furthermore, the battery pack further includes at least one liquid cooling plate, and the at least one liquid cooling plate is arranged in at least one of the (N-1) columns of the gaps.

In this way, during an operation of a high-density battery pack, liquid cooling plates or reinforcing plates can be selectively placed in the gaps to prevent overheating that could affect performance of the battery pack. When a higher heat dissipation is required, more liquid cooling plates can be mounted. When the heat dissipation requirement is satisfied, reinforcing plates can be selectively arranged in other gaps, so that the battery pack meets the strength and insulation requirements as well.

Furthermore, each of the plurality of battery cells is a cylindrical battery cell. A plurality of protruding structures (31) facing the plurality of battery cells (21) are disposed on each of the foam adhesive layer and the at least one liquid cooling plate. Each of the plurality of protruding structures extends between two corresponding adjacent cylindrical battery cells of the plurality of battery cells in a same column. The each of the plurality of protruding structures is attached to cylindrical surfaces of the two corresponding adjacent cylindrical battery cells.

By adopting the above solution, for cylindrical battery cells of the battery pack, both the at least one liquid cooling plate and the foam adhesive layer of the reinforcing plates are equipped with protruding structures to attach to the cylindrical battery cells. In this way, a contact area between the at least one liquid cooling plate and the battery cells can be increased, improving the heat dissipation, as well as a contact area between the reinforcing plates and the battery cells, thereby enhancing strength and insulation performance of the battery pack.

Furthermore, two adjacent columns of the battery cells of the plurality of battery cells are arranged in a staggered manner. Each of the (N-1) columns of gaps is in a serpentine shape. Each of the foam adhesive layer, the fiberglass cloth layer, and the at least one liquid cooling plate is bent along a corresponding column of the (N-1) columns of gaps.

By adopting the above solution, the cylindrical battery cells are arranged in a staggered manner, which increases a cell density of the battery pack. In this arrangement, a gap between two adjacent columns of battery cells becomes serpentine. Correspondingly, the foam adhesive layer, the fiberglass cloth layer, and the liquid cooling plate are also serpentine, allowing the reinforcing plates and liquid cooling plates to fit in the serpentine gaps. In this way, the gaps between battery cells can be minimized, ensuring a desired cell density of the battery pack while maintaining a sufficient contact area between the at least one liquid cooling plate and the battery cells and a sufficient contact area between the reinforcing plates and the battery cells, guaranteeing the heat dissipation performance of the liquid cooling plates while ensuring the strength and insulation performance provided by the reinforcement plates.

Furthermore, a corresponding one of the at least one liquid cooling plate is arranged in one of two adjacent columns of the (N-1) columns of gaps. A corresponding one of the plurality of reinforcing plates is arranged in another of the two adjacent columns of the (N-1) columns of gaps.

By adopting the above solution, to ensure uniform heat dissipation in the battery cell group, the at least one liquid cooling plate and the reinforcing plates are arranged alternately. This ensures even heat dissipation of the battery cell group while uniformly distributing the reinforcing plates, thereby improving the stiffness and safety of the battery pack.

Furthermore, the battery cell group is arranged with pressure relief valves. The pressure relief valves are disposed close to a bottom surface of the housing. The housing has a top surface arranged opposite to the bottom surface. A side of the top surface facing the battery cell group is arranged with one of the plurality of reinforcing plates, and/or a side of the top surface away from the battery cell group is arranged with another one of the plurality of reinforcing plates.

By adopting the above solution, pressure relief valves of the battery cell group are all oriented in a same direction to facilitate diversion of thermal runaway substances. With the pressure relief valves oriented uniformly, reinforcing plates are mounted on the top surface of the housing opposite to the bottom surface to enhance strength of the top surface, improving safety during use, transportation, and stacked storage of the battery pack.

Furthermore, one or more assembly grooves (111) are disposed in the top surface of the housing defines an assembly groove. One of the plurality of reinforcing plates is arranged in the assembly groove. When one of the plurality of reinforcing plates is arranged on the side of the top surface away from the battery cell group, the foam adhesive layer of the one of the plurality of reinforcing plates arranged on the side of the top surface away from the battery cell group is flush with an outer periphery of the top surface of the housing.

In this way, the assembly groove in the top surface of the housing facilitates mounting of the reinforcing plate while maintaining an overall integrity of the housing.

Furthermore, the fiberglass cloth layer includes three layers.

By adopting the above solution, the three-layer fiberglass cloth structure forms a sturdier "skeleton," enhancing mechanical strength and rigidity of the reinforcing plates. This helps reduce deformation when the battery pack is subjected to external impacts, vibrations, or pressure, improving an overall structural stability and reducing a risk of damage due to external forces.

Furthermore, a pressure relief hole group (121) corresponding to the battery cell group (2) is disposed on the bottom surface of the housing.

By adopting the above solution, the pressure relief hole group in the bottom surface of the housing which is corresponding to the battery cell group facilitates an arrangement of the pressure relief valves of the battery cell group.

In summary, the battery pack provided in the present disclosure offers the following technical effects.

1. By mounting reinforcing plates on both sides of the battery cell group along the length direction of the battery cell group, the bending and shear resistance of the battery pack is specifically enhanced according to the lever principle, effectively addressing an issue of deformation of the battery pack under force.

2. The foam adhesive layer and fiberglass cloth layer structure of the reinforcing plates maintains low weight and volume without reducing the high energy density of the battery pack, achieving dual optimization of structural strength and space efficiency.

3. Each of the foam adhesive layer and fiberglass cloth layer is an insulating material, enhancing the insulation performance and safety of the battery pack, effectively preventing short circuits caused by poor insulation.

In addition to the above technical effects:

4. Since the battery pack manufacturing process already involves potting, the reinforcing plates can be added by simply placing the fiberglass cloth layer in the corresponding position before injecting the foam adhesive. In this way, the process of adding reinforcement plates can be simplified, reducing additional costs, shortening production duration, and improving production efficiency.

5. The burrs of the fiberglass cloth layer help eliminate bubbles in the foam adhesive, making the foam adhesive denser. This solidification trend significantly increases a density, strength, and hardness of the foam adhesive layer, further enhancing physical property of the reinforcing plate and ensuring the structural stability and durability of the battery pack.

### BRIEF DESCRIPTION OF THE DRAWINGS

FIG. 1 is a three-dimensional structural view of a battery pack according to embodiments of the present disclosure.
FIG. 2 is an exploded view of the battery pack according to embodiments of the present disclosure.
FIG. 3 is an enlarged view of a portion A in FIG. 2.
FIG. 4 is a structural view of battery cells, reinforcing plates, and liquid cooling plates in a separated state according to embodiments of the present disclosure.
FIG. 5 is a partial three-dimensional structural view of a battery cell group, the reinforcing plates, and the liquid cooling plates according to embodiments of the present disclosure.
FIG. 6 is a partial top-view of the battery cell group, the reinforcing plates, and the liquid cooling plates according to embodiments of the present disclosure.

Reference numerals in the drawings are as follows:
1-housing; 11-top surface; 111-assembly groove; 12-bottom surface; 121-pressure relief hole group; 2-battery cell group; 21-battery cell; 3-reinforcing plate; 31-protruding structure; 4-liquid cooling plate.

### DETAILED DESCRIPTION

To better understand and implement the present disclosure, the technical solutions in the embodiments of the present disclosure will be clearly and completely described and discussed below in conjunction with the accompanying drawings. Obviously, the described embodiments are only a part of the examples of the present disclosure, not all of them. Based on the embodiments of the present disclosure, all other embodiments obtained by those of ordinary skill in the art without creative efforts shall fall within the protection scope of the present disclosure.

To facilitate the understanding of the embodiments of the present disclosure, the following description will further explain specific embodiments with reference to the accompanying drawings. These examples are not intended to limit the scope of the present disclosure.

In the description of the present disclosure, it should be noted that the terms "upper," "lower," "front," "rear," "left," "right," "vertical," "horizontal," "top," "bottom," "inner," "outer," etc., indicate orientations or positional relationships based on the orientations or positional relationships shown in the drawings. They are only for the convenience of describing the present disclosure and simplifying the description, and do not indicate or imply that the referred device or element must have a specific orientation or be constructed and operated in a specific orientation. Therefore, they should not be construed as limiting the present disclosure.

Unless otherwise defined, all technical and scientific terms used herein have the same meanings as commonly understood by those skilled in the technical field of the present disclosure. The terms used in the specification of the present disclosure are only for the purpose of describing specific embodiments and are not intended to limit the present disclosure.

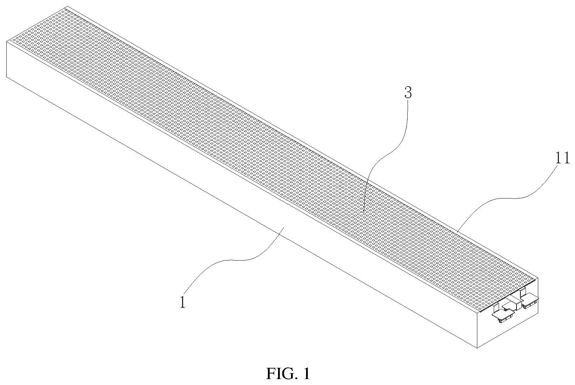

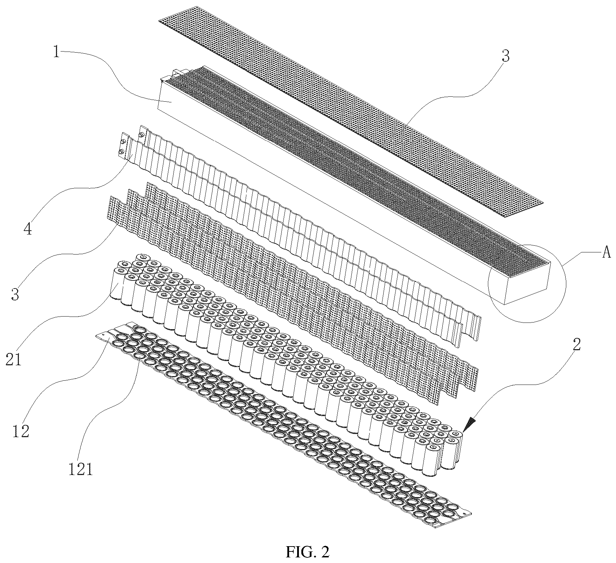

Referring to FIGS. 1-2, the present disclosure provides a battery pack. The battery pack includes a housing 1, a battery cell group 2, and a plurality of reinforcing plates 3. Each of the reinforcing plates 3 includes a foam adhesive layer and a fiberglass cloth layer. The foam adhesive layer encapsulates the fiberglass cloth layer. The battery cell group 2 is disposed in the housing 1. Each of two side walls of the battery cell group 2 along a length direction of the battery cell group 2 is arranged with a corresponding reinforcing plate 3. The foam adhesive layer is attached to a corresponding one of the two side walls of the battery cell group 2.

Specifically, the battery pack consists of the housing 1, the battery cell group 2, and the reinforcing plates 3. The battery cell group 2 is arranged in the housing 1. Each reinforcing plate 3 is composed of the foam adhesive layer encapsulating the fiberglass cloth layer. The foam adhesive layer is made of foam adhesive, and the fiberglass cloth layer is made of fiberglass cloth. Each of the two side walls of the battery cell group 2 along the length direction of the battery cell group 2 is arranged with a reinforcing plate 3, and the reinforcing plate 3 is attached to the corresponding side wall of the battery cell group 2. Since the side walls of the battery cell group 2 are areas with a highest stress concentration, attaching the reinforcing plates 3 to the side walls-i.e., attaching the foam adhesive layers to the side walls-specifically enhances strength of the two side walls of the battery pack along the length direction of the battery pack. The side walls may refer to a top side wall and a bottom side wall of the battery cell group 2 or side walls corresponding to cylindrical surfaces of the battery cells 21 along the length direction of the battery cell group 2. That is, without affecting normal arrangement of pressure relief valves of the battery cells 21 in the battery cell group 2, the reinforcing plates 3 can be mounted on the top side wall and the bottom side wall of the battery cell group 2 or on a left side wall and a right side wall along the length direction of the battery cell group 2. Additionally, a shape of each reinforcing plate 3 can be arranged to match a shape of a corresponding side wall of the battery cell group 2, meaning the foam adhesive layer and the fiberglass cloth layer can be shaped according to the shape of the corresponding side wall of the battery cell group 2.

Specific manufacturing process of the reinforcing plates 3 may involve pre-spraying foam adhesive on the fiberglass cloth layer to form the reinforcing plates 3. Alternatively, the fiberglass cloth layer can be placed on a corresponding side wall of the battery cell group 2 in the housing 1, and during a potting process for the battery cell group 2, part of the foam adhesive solidifies on a surface of the fiberglass cloth layer to form the foam adhesive layer. In this way, fewer manufacturing steps are required, ensuring that an addition of reinforcing plates 3 does not affect a normal production timeline of the battery pack. Moreover, due to a material property of the fiberglass cloth layer, the fiberglass cloth layer inherently has burrs that can puncture bubbles in the foam adhesive, increasing a density of the foam adhesive and giving the foam adhesive layer a trend toward solidification, thereby further enhancing strength and hardness of the reinforcing plates 3.

In some embodiments, to improve bonding strength between the fiberglass cloth layer and the foam adhesive layer, the fiberglass cloth layer has pores and burrs. The burrs can penetrate in the foam adhesive layer, and the foam adhesive layer can penetrate in the pores.

Specifically, due to the material property of the fiberglass cloth used to form the fiberglass cloth layer, the fiberglass cloth inherently has pores and burrs. With the burrs penetrating the foam adhesive layer and the foam adhesive layer penetrating the pores, a contact area between the fiberglass cloth layer and the foam adhesive layer can be significantly increased, thereby effectively improving the bonding strength between the fiberglass cloth layer and the foam adhesive layer. Furthermore, based on a structural property of the fiberglass cloth layer, during manufacturing of the reinforcing plates 3, the fiberglass cloth forming the fiberglass cloth layer can be fixed in a mold of the reinforcing plates 3, and the foam adhesive forming the foam adhesive layer can be injected into the mold. Due to the pores and burrs in the fiberglass cloth layer, the foam adhesive flows into the pores, and the burrs puncture the bubbles in the foam adhesive, increasing the density of the foam adhesive forming the foam adhesive layer and giving the foam adhesive layer the trend toward solidification, thereby significantly improving the strength and hardness of the foam adhesive layer.

In some embodiments, to increase energy storage capacity of the battery pack, the number of battery cells 21 can be increased. The battery cell group 2 includes a plurality of battery cells 21. The plurality of battery cells 21 are arranged in N columns. The N columns of battery cells 21 define (N-1) columns of gaps, with each two adjacent columns of battery cells 21 defining a column of gap. At least one reinforcing plate 3 is arranged in at least one column of the gap, and the foam adhesive layer of the least one reinforcing plate 3 arranged in at least one column of the gap is attached to battery cells 21 adjacent to the foam adhesive layer.

Specifically, the battery cell group 2 consists of the plurality of battery cells 21. The plurality of battery cells 21 are arranged in N columns. The N columns of battery cells 21 define (N-1) columns of gaps. Depending on actual strength and insulation requirements, the at least one reinforcing plate 3 can be selectively mounted in one or more columns of gaps. The foam adhesive layer of the at least one reinforcing plate 3 mounted in one or more columns of gaps is attached to corresponding side walls of battery cells 21 adjacent to the foam adhesive layer.

In some embodiments, to prevent overheating that could affect the battery pack's use, the battery pack further includes at least one liquid cooling plate 4. The at least one liquid cooling plate 4 is arranged in at least one column of the gaps. An arrangement of the at least one liquid cooling plate 4 and the plurality of reinforcing plates 3 can be as follows: selectively mounting the at least one liquid cooling plate 4 or the plurality of reinforcing plates 3 in the gaps. When a higher heat dissipation is required, more liquid cooling plates 4 can be mounted. When the heat dissipation requirement is satisfied, reinforcing plates 3 can be selectively arranged in other gaps, so that the battery pack meets the strength and insulation requirements as well.

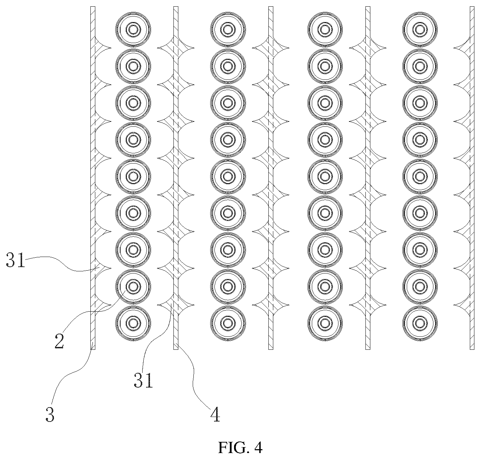

Referring to FIG. 4, in some embodiments, when the battery cells 21 are cylindrical, each of the foam adhesive layer of the reinforcing plate 3 and the liquid cooling plate 4 is arranged with protruding structures 31 facing the battery cells 21. Each of the protruding structures 31 extends between two corresponding adjacent cylindrical battery cells in a same column and is attached to cylindrical surfaces of the two corresponding adjacent battery cells.

Specifically, the protruding structures 31 are arranged to match side walls of the cylindrical battery cells, increasing a contact area between the liquid cooling plate 4 and the battery cells 21 to improve the heat dissipation, as well as a contact area between the reinforcing plate 3 and the battery cells 21 to enhance the strength and insulation performance of the battery pack.

It should be noted that FIG. 4 shows a relationship of a shape of the protruding structures 31 and the cylindrical battery cells, with exaggerated gaps between the reinforcing plate 3, liquid cooling plate 4, and the battery cells for clarity. In reality, they are in close contact.

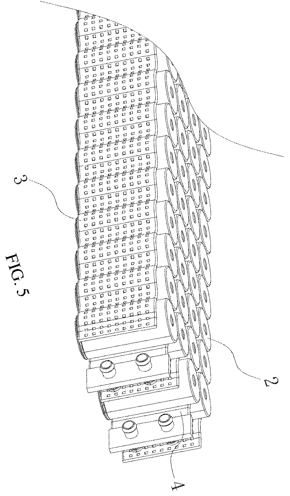

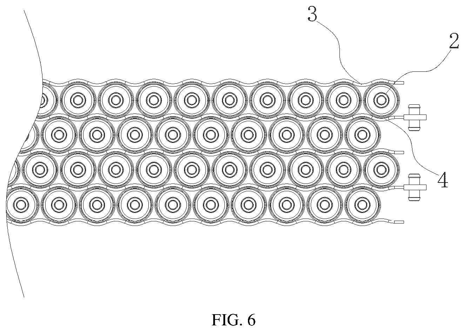

Referring to FIGS. 5 and 6, for cylindrical battery cells 21, to increase a cell density of the battery pack, each two adjacent columns of battery cells 21 are arranged in a staggered manner, resulting in the gaps in a serpentine shape. Correspondingly, the reinforcing plate 3 and the liquid cooling plate 4 are serpentine to match the serpentine gaps, meaning the foam adhesive layer and fiberglass cloth layer of the reinforcing plate 3 are serpentine corresponding to the serpentine gaps. This allows the foam adhesive layer, fiberglass cloth layer, and liquid cooling plate 4 to fit into the serpentine gaps, minimizing the gaps between battery cells 21 and ensuring a desired cell density of the battery pack. It also ensures sufficient contact area between the foam adhesive layer and the battery cells 21, as well as between the liquid cooling plate 4 and the battery cells 21, guaranteeing the heat dissipation performance of the liquid cooling plate 4 while ensuring the strength and insulation performance provided by the reinforcement plate 3.

In some embodiments, to ensure uniform heat dissipation of the battery cell group 2, a following arrangement is adopted for the (N-1) columns of gaps: between two adjacent columns of gaps, one column is equipped with the liquid cooling plate 4, and the other column is equipped with the reinforcing plate 3. That is, the liquid cooling plate 4 and reinforcing plate 3 are arranged alternately, ensuring uniform heat dissipation while evenly distributing the reinforcing plates 3, thereby improving the stiffness and safety of the battery pack.

Additionally, in some battery pack designs, the liquid cooling plate 4 is mounted on only one side of the battery pack. In such cases, the reinforcing plates 3 can be mounted in the gaps without the liquid cooling plate 4. In this way, the reinforcing plates 3 are arranged at intervals, enhancing the stiffness and safety of the battery pack without affecting the configuration of the single-sided liquid cooling plates 4.

In some embodiments, to ensure battery safety, the battery cell group 2 is arranged with pressure relief valves. When the battery cell group 2 consists of the plurality battery cells 21, the pressure relief valves of all battery cells 21 face a same direction to facilitate a diversion of thermal runaway substances. The pressure relief valves face a bottom surface 12 of the housing 1, corresponding to a bottom side wall of the battery cell group 2. A face of the housing 1 opposite to the bottom surface 12 is a top surface 11. A side of the top surface 11 facing the battery cell group 2 is arranged with the reinforcing plate 3, and/or a side of the top surface 11 away from the battery cell group 2 is arranged with the reinforcing plate 3. Correspondingly, to facilitate the arrangement of the pressure relief valves of the plurality of battery cells 21 in the battery cell group 2, no reinforcing plate 3 is mounted on a side of the battery cells 21 where the pressure relief valves are located.

Specifically, the reinforcing plate 3 can be mounted on the side of the top surface 11 of the housing 1 facing the battery cell group 2, or on the side of the top surface 11 of the housing 1 away from the battery cell group 2, or one reinforcing plate 3 is mounted on the side of the top surface 11 of the housing 1 facing the battery cell group 2, and one reinforcing plate 3 is mounted on the side of the top surface 11 of the housing 1 away from the battery cell group 2. In this way, strength of the top surface 11 of the battery cell group 2 can be enhanced, improving safety during use, transportation, and stacked storage of the battery pack. That is, during use, transportation, or stacked storage, the foam adhesive layer can provide excellent energy absorption, while the combination of the fiberglass cloth layer and the foam adhesive layer can offer certain bending resistance to a top portion of the battery pack, thereby enhancing the safety of the battery pack.

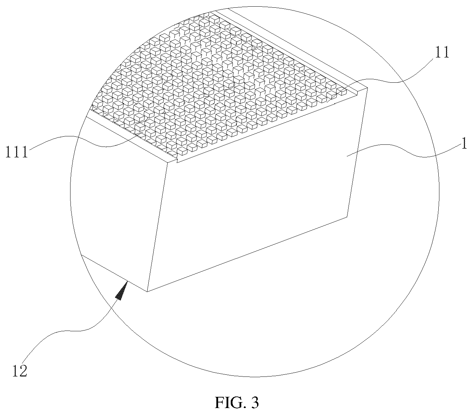

Referring to FIG. 3, when the reinforcing plate 3 is mounted on the side of the top surface 11 of the housing 1 away from the battery cell group 2, the top surface 11 of the housing 11 defines an assembly groove 111, and the reinforcing plate 3 is arranged in the assembly groove 111, flush with an outer periphery of the top surface 11. In this way, the mounting of the reinforcing plate 3 can be facilitated, while the foam layer of reinforcing plate 3 is flush with the outer periphery of the top surface 11 of housing 1 while maintaining overall integrity of the housing 1 even after the reinforcing plate 3 is mounted in the assembly groove 111.

In some embodiments, the fiberglass cloth layer of the reinforcing plate 3 includes three layers. The three-layer structure forms a sturdier "skeleton," enhancing mechanical strength and rigidity of the reinforcing plate 3. This configuration helps reduce deformation when the battery pack is subjected to external impacts, vibrations, or pressure, improving overall structural stability and reducing a risk of damage due to external forces.

In some embodiments, to further improve the safety of the battery pack, a bottom surface 12 of the housing 1 defines a pressure relief hole group 121 corresponding to the battery cell group 2. That is, the pressure relief hole group 121 is corresponding to the pressure relief valves of the battery cell group 2, allowing the runaway substances to be expelled from the battery pack, thereby enhancing the safety of the battery pack.

The technical solutions disclosed in the present disclosure are not limited to the technical means described in the above embodiments but also include technical solutions formed by any combination of the above technical features. It should be noted that, for those skilled in the art, several improvements and modifications can be made without departing from the principles of the present disclosure, and these improvements and modifications shall also be regarded as the protection scope of the present disclosure.

## Claims

1. A battery pack, **characterized by** comprising:
a housing (1);
a battery cell group (2), arranged in the housing (1); and
a plurality of reinforcing plates (3), disposed on the battery cell group (2) along a length direction of the battery cell group (2)), wherein each of the plurality of reinforcing plates (3) comprises a foam adhesive layer and a fiberglass cloth layer, and the foam adhesive layer encapsulates the fiberglass cloth layer;
wherein the foam adhesive layer is attached to the battery cell group (2).

2. The battery pack according to claim 1, wherein the fiberglass cloth layer has pores and burrs, the burrs extend into the foam adhesive layer, and the foam adhesive layer enters the pores.

3. The battery pack according to any one of claims 1-2, wherein the battery cell group (2) comprises a plurality of battery cells (21), the plurality of battery cells (21) are arranged in N columns, (N-1) columns of gaps are formed between the N columns of battery cells (21) , at least one column of the (N-1) columns of the gaps is provided with a corresponding one reinforcing plate (3) of the plurality of reinforcing plates (3).

4. The battery pack according to claim 3, wherein the foam adhesive layer of the corresponding one reinforcing plate (3) is attached to one or two columns of the N columns of the battery cells (21) adjacent to the foam adhesive layer.

5. The battery pack according to any one of claims 3-4, further comprising at least one liquid cooling plate (4), wherein the at least one liquid cooling plate (4) is arranged in at least one column of the (N-1) columns of gaps.

6. The battery pack according to claim 5, wherein the plurality of battery cells (21) are cylindrical battery cells.

7. The battery pack according to claim 6, wherein a plurality of protruding structures (31) facing the plurality of battery cells (21) are disposed on each of the foam adhesive layer and the at least one liquid cooling plate (4), each of the plurality of protruding structures (31) extends between two corresponding adjacent cylindrical battery cells of the plurality of battery cells (21) in a same column, and the each of the plurality of protruding structures (31) is attached to cylindrical surfaces of the two corresponding adjacent cylindrical battery cells.

8. The battery pack according to any one of claims 5-7, wherein two adjacent columns of the battery cells (21) of the plurality of battery cells (21) are arranged in a staggered manner, each of the (N-1) columns of gaps is in a serpentine shape, and the plurality of reinforcing plates (3) and the at least one liquid cooling plate (4) are each bent along a corresponding column of the (N-1) columns of gaps.

9. The battery pack according to any one of claims 5-8, wherein a corresponding one of the at least one liquid cooling plate (4) is arranged in one of two adjacent columns of the (N-1) columns of gaps, and a corresponding one of the plurality of reinforcing plates (3) is arranged in another of the two adjacent columns of the (N-1) columns of gaps.

10. The battery pack according to any one of claims 1-9, wherein the battery cell group (2) is provided with pressure relief valves, and the pressure relief valves are disposed close to a bottom surface (12) of the housing (1).

11. The battery pack according to claim 10, wherein, the housing (1) has a top surface (11) arranged opposite to the bottom surface (12), a side of the top surface (11) facing the battery cell group (2) is provided with one of the plurality of reinforcing plates (3), and/or a side of the top surface (11) away from the battery cell group (2) is provided with another one of the plurality of reinforcing plates (3).

12. The battery pack according to any one of claims 10-11, wherein one or more assembly grooves (111) are disposed in the top surface (11) of the housing (1), the one of the plurality of reinforcing plates (3) and/or the another one of the plurality of reinforcing plates (3) are arranged in the assembly grooves (111).

13. The battery pack according to any one of claims 11-12, wherein the foam adhesive layer of the another one of the plurality of reinforcing plates (3) arranged on the side of the top surface (11) away from the battery cell group (2) is flush with an outer periphery of the top surface (11) of the housing (1).

14. The battery pack according to any one of claims 1-13, wherein the fiberglass cloth layer comprises three layers.

15. The battery pack according to any one of claims 1-14, wherein a pressure relief hole group (121) corresponding to the battery cell group (2) is disposed on the bottom surface (12) of the housing (1).
